# FASCICULE DE BREVET EUROPEEN

(11) **EP 2 461 652 B1**
(45) Date de publication et mention de la délivrance du brevet: **26.02.2014**
(21) Numéro de dépôt: 10306328.5
(22) Date de dépôt: 01.12.2010
(51) Int. Cl.: H05B 39/04, H05B 39/08

(54) **Procédé de mise en fonctionnement d'un variateur de lumière**
Verfahren zur Inbetriebnahme einer Lichtverstärkerröhre
Method for starting a dimmer switch

(43) Date de publication de la demande: 06.06.2012
(73) Titulaire: HAGER CONTROLS, 67700 Saverne (FR)
(72) Inventeur: Elsass, Marc, 67140 Barr (FR); Poisson, Christophe, 67700 Furchhausen (FR)
(74) Mandataire: Littolff, Denis

(56) Documents cités:
- EP-A1- 0 618 667
- FR-A1- 2 802 360
- FR-A1- 2 856 236
- US-A1- 2009 284 182

## Description

La présente invention a trait à un procédé de mise en fonctionnement d'un variateur de lumière sur une charge lumineuse quelconque placée en sortie du variateur, y compris les lampes fluorescentes compactes (dites lampes fluo compactes ou lampes CFL) et les lampes à diodes électroluminescentes ou lampes LED, qui remplacent de nos jours dans une large mesure les ampoules à incandescence traditionnelles notamment parce qu'elles consomment beaucoup moins d'énergie.

Les configurations dans lesquelles on trouve actuellement la plupart desdites lampes fluorescentes ou LED, sont telles qu'elles peuvent être simplement et directement utilisées à la place des ampoules traditionnelles puisqu'elles sont fabriquées avec un culot traditionnel et une ampoule de volume usuel qui renferme le tube fluorescent ou les LED indispensables à ces technologies.

C'est la raison pour laquelle on peut être tenté de les utiliser dans des environnements techniques identiques, avec par exemple des accessoires de type variateurs de lumière pour régler leur luminosité, accessoires pour lesquels ces lampes posent cependant des problèmes spécifiques car constituant des charges qui ne réagissent pas nécessairement comme les charges lumineuses existantes.

Pour mémoire, ces charges existantes sont typiquement classées dans trois catégories selon qu'elles sont plutôt résistives, inductives ou capacitives, ces catégories ne pouvant pas être traitées de façon identique par le variateur parce qu'elles réagissent différemment aux signaux de commande, nécessitant dès lors des traitements différents en amont. L'alimentation variable des charges s'effectue en pratique au moyen d'un signal de sortie découpé dans la phase selon un mode de découpage qui dépend de la nature de la charge, impliquant une première opération de détection de la catégorie de la charge.

Lorsqu'elle est inductive, ladite charge est alimentée selon un mode dit de conduction à l'angle. Ce mode d'alimentation convient également aux charges résistives, mais provoque des surintensités lorsque des charges de nature capacitive sont placées en sortie de l'étage d'alimentation.

Les récepteurs capacitifs sont plutôt alimentés selon un mode de fonctionnement dit de coupure à l'angle, selon lequel la première portion de chaque alternance est transmise à la charge alors que le reste de l'alternance est bloqué, à l'inverse du mode de conduction à l'angle qui transmet le signal du secteur à partir d'un angle de consigne. De fortes surtensions surviennent lorsque ce mode de fonctionnement de coupure à l'angle est utilisé avec des charges inductives. A la longue, ces surtensions peuvent aboutir à la destruction du variateur.

Les angles de consigne appliqués à la charge peuvent varier de 0% à 100%, ce qui sous-entend qu'une consigne de quelques pourcents doit permettre à la charge de s'allumer faiblement mais correctement (sans papillotements ou sans à-coups) avec une variation très graduelle lorsque l'angle augmente sous l'effet de l'action de l'utilisateur.

Pour réduire les risques de destruction des composants des variateurs et améliorer la durée de vie des lampes, des procédés de démarrage en douceur dits « soft-start » sont d'ailleurs utilisés, qui testent la nature des charges et gèrent leur allumage d'une manière progressive avec pour objectif une réduction des phénomènes transitoires de type surtension ou surintensité.

Dans les variateurs actuels, qui sont conçus pour s'adapter automatiquement à la nature de la charge lors de leur mise sous tension, les procédés soft-start privilégient un démarrage en mode coupure à l'angle car il est facile de détecter les surtensions qui apparaissent lorsque les charges sont inadaptées. Le variateur est basculé en mode de conduction à l'angle lorsqu'une surtension significative est détectée.

Cependant, des problèmes particuliers se posent lorsque les charges lumineuses sont constituées d'ampoules de type fluo compactes ou LED, car les procédés soft-start classiques ne sont pas adaptés au mode de fonctionnement notamment des ampoules de type fluo compactes, dont la durée d'allumage excède bien souvent les durées des périodes progressives gérées par le procédé soft-start. L'angle de conduction correspondant à la consigne minimale est d'ailleurs souvent trop faible pour en permettre l'allumage, et inversement lorsque le réglage est effectué dans le sens d'une réduction de la luminosité, l'angle de conduction correspondant à ladite consigne minimale est également trop faible pour que l'ampoule reste allumée.

D'ailleurs, le fonctionnement au voisinage de la consigne minimale est en lui-même problématique puisque, notamment selon la température de la lampe, il peut se produire un clignotement de la lampe à la fréquence de charge/décharge du ballast qui fournit la haute tension au tube fluorescent équipant les ampoules.

Enfin, et ce n'est pas la moindre des complications, les modes d'alimentation classiques en coupure à l'angle ou en conduction à l'angle ne fonctionnent pas toujours correctement avec des ampoules de type fluo compactes ou LED, et il faut en pratique tester et configurer le mode d'alimentation pour chaque ampoule connectée, même lorsque lesdites ampoules sont commercialisées avec le label « à commande variable ».

Les publications de demandes de brevet US 2009/284182 A1, EP 0 618 667 A1, FR 2 802 360, FR 2 856 236 montrent des procédés de l'état de l'art.

La présente invention remédie à ces problèmes en ce que le procédé mis en oeuvre permet de commander toute charge lumineuse, y compris les lampes dites fluo compactes ou LED, autorisant une commande variable de la luminosité de ces charges dans le mode de découpage approprié. Cela n'est bien entendu possible qu'après analyse du mode de commande adéquat, pour un intervalle de valeurs de consignes correspondant à la charge, que le procédé de l'invention se propose d'identifier.

Ce procédé, destiné en résumé à la mise en fonctionnement d'un variateur de lumière sur une charge de type luminaire de nature quelconque placée en sortie d'un étage de puissance du variateur géré par un microcontrôleur et fournissant une alimentation variable par découpage de phase en mode soit de conduction à l'angle, soit de coupure à l'angle à partir d'un état de non alimentation en sortie de l'étage de puissance pris par le variateur en l'absence de charge, comporte à titre essentiel les différentes étapes suivantes :
a/ détection de la présence d'une charge en sortie de l'étage d'alimentation ;
b/ en cas de présence d'une charge, activation de l'alimentation de ladite charge en mode coupure à l'angle, et incrémentation régulière de l'angle de coupure selon un pas prédéterminé, en l'absence de surtension, jusqu'à l'obtention d'un angle maximal α_{M} de consigne de commande, ou basculement en mode conduction à l'angle en cas d'apparition de surtensions ;
c/ première temporisation à l'obtention de l'angle maximal α_{M} de consigne ;
d/ établissement de l'angle de coupure à une valeur prédéterminée αₚ comprise entre 40 et 50 pourcent de l'angle maximal α_{M} de consigne de commande ;
e/ seconde temporisation ;
f/ acquisition, mémorisation et traitement de la tension Up aux bornes du variateur ;
g/ comparaison de la tension Up après traitement à une valeur de tension seuil Uₛ prédéterminée ;
h/ activation du variateur en mode conduction à l'angle si ladite tension Up après traitement est instable suivant un critère d'instabilité prédéterminé, puis détection de l'angle minimal αₘ de fonctionnement avant extinction de la lampe ;
i/ dans le cas contraire, et si la tension est supérieure à la tension seuil Uₛ prédéterminée, activation du variateur en mode coupure à l'angle, puis détection de l'angle minimal αₘ de fonctionnement avant extinction de la lampe ;
j/ si ladite tension Up après traitement est stable suivant un critère d'instabilité prédéterminé, et si la tension est inférieure à la tension seuil Uₛ prédéterminée : acquisition, mémorisation et traitement du courant Iₚ durant une durée d' dans la charge, puis détection de l'angle minimal αₘ de fonctionnement avant extinction de la lampe ;
k/ après validation de l'angle minimal αₘ, acquisition, mémorisation et traitement du courant Iₘ dans la charge durant une durée d' ;
l/ si Iₘ < Ip, activation du variateur en mode conduction à l'angle ;
m/ si Iₘ > Ip, activation du variateur en mode coupure à l'angle.

Le procédé de l'invention, en plus des modes de fonctionnement traditionnels rappelés ci-dessus et basés soit sur une conduction à l'angle, soit sur une coupure à l'angle, met par conséquent également en oeuvre une détection des lampes fluo compacts et lampes LED non variables, autorisant le variateur à les alimenter uniquement en mode coupure à l'angle, seul mode de découpage qui ne détériore pas ces ampoules.

Il commence en fait comme dans les procédés de démarrage de type soft-start traditionnels en testant l'existence d'une charge inductive aux bornes du variateur. Si c'est le cas, il se produit un basculement en mode conduction à l'angle apte à gérer une telle charge.

Sinon, le procédé soft-start se déroule progressivement jusqu'à obtention de la consigne d'angle maximal. Une temporisation permet à une lampe de type fluo compacte, si elle constitue la charge, de s'allumer et de se stabiliser.

Puis, le variateur descend directement à une consigne bien inférieure pour tester, par l'acquisition successive de valeurs de tension et éventuellement de courant dans la charge, le mode de fonctionnement possible pour la charge de type fluo compacte ou de type LED disposée en sortie du variateur.

En pratique, l'acquisition de tension s'effectue n fois pour chaque demi-période du secteur, après la coupure du signal, pendant une durée d. Plus précisément encore, selon l'invention, n est compris entre 5 et 15 et la durée d est comprise entre 1 et 3 s.

De fait, le traitement de la tension mentionné auparavant consiste à faire la moyenne des tensions acquises pour chaque demi-période du secteur pendant la durée d, et à ne mémoriser que les moyennes supérieure et inférieure. La valeur de la tension après traitement est en réalité la moyenne supérieure ainsi mémorisée, qui est donc comparée à une valeur seuil prédéterminée.

Cette comparaison détermine le mode de fonctionnement comme indiqué auparavant, le critère d'instabilité prédéterminé déterminant le fonctionnement en mode conduction à l'angle étant validé lorsque la valeur de la moyenne supérieure divisée par deux est supérieure à la moyenne inférieure.

En pratique, une première temporisation de 1 s à 10 s est mise en oeuvre à l'issue de l'étape b/, permettant comme indiquée qu'une charge de type lampe fluo compacte ait le temps de s'allumer de manière stable. La seconde temporisation suite à l'établissement de l'angle de coupure à une valeur prédéterminée comprise entre 40 et 50% de l'angle maximal de consigne de commande est comprise entre 1 s et 5 s.

De préférence, l'angle maximal αₘ de consigne de commande correspond à une durée de 8,5 ms en 50 Hz, et la valeur prédéterminée αₚ de l'angle de coupure correspond à 4 ms.

De préférence encore, la durée d' d'acquisition, de mémorisation et de traitement du courant Ip dans la charge est comprise entre 400 et 600 ms.

Les caractéristiques précédentes permettent la mise en place du mode de découpage ou de fonctionnement adéquat, c'est-à-dire dépendant de la charge et intégrant les spécificités des lampes de type fluo compactes et de type LED.

Dans la même logique, puisque l'invention s'applique à des variateurs et que le but est de les faire fonctionner correctement pour tout type de charge, y compris précisément les charges de type fluo compactes ou de type LED, il convient également de détecter l'angle minimal de fonctionnement de ces charges particulières.

Dans ce cas, une telle détection comporte les étapes ultérieures suivantes en boucle itérative pour la recherche de la consigne d'angle minimal αₘ lorsque le mode de coupure à l'angle ou de conduction à l'angle est activé avec la consigne initiale α ₚ:
n/ temporisation d'une durée t ;
o/ acquisition, mémorisation et traitement du courant dans la charge pendant une période prédéterminée p ;
p/ si la consigne d'angle n'est pas la consigne initiale αₚ, comparaison d'une valeur de courant Iₙ de la consigne courante après traitement à une valeur calculée égale à un pourcentage x de la valeur Iₙ₋₁ issue du traitement de courant de la consigne précédente ;
q/ si la consigne d'angle est la consigne initiale αₚ, décrémentation de la consigne d'un pas p prédéterminé et retour à o/ ;
r/ selon le résultat de la comparaison, établissement de la consigne d'angle minimal αₘ à la consigne précédente lorsque Iₙ ≥ xIₙ₋₁ ou établissement d'une nouvelle consigne courante par décrémentation de la consigne d'un pas p prédéterminé et retour à o/, sauf à passer sous un seuil de consigne minimale prédéterminée, laquelle devient la consigne minimale αₘ.

En somme, on réalise des tests successifs en abaissant progressivement l'angle de consigne pour vérifier jusqu'à quelle valeur minimale le fonctionnement des lampes est satisfaisant.

En pratique, l'acquisition de courant s'effectue n' fois pour une demi-période du secteur sur deux, pendant la période prédéterminée p pour chaque boucle itérative.

Par ailleurs, la moyenne la plus haute et la moyenne la plus basse des demi-périodes sont mémorisées pour chaque boucle itérative, et forment la base des traitements effectués pour déterminer ladite valeur minimale de fonctionnement.

Ainsi, la valeur calculée de la consigne précédente est la moyenne haute divisée par deux, la valeur de courant après traitement de la consigne courante est la moyenne basse, et la décrémentation itérative est poursuivie tant que la seconde est supérieure à x fois la première, et stoppée dans le cas contraire.

Selon une possibilité, x est égale à 0,5. Par ailleurs, la période prédéterminée p est comprise entre 400 ms et 600 ms.

De préférence, la décrémentation de la consigne courante s'effectue suivant des pas de l'ordre de 250 µs. L'opération d'abaissement itératif de la valeur de consigne est répétée jusqu'à une valeur minimale prédéterminée par exemple établie à une valeur de 1,5 ms, correspondant à une consigne d'angle minimale α ₘ.

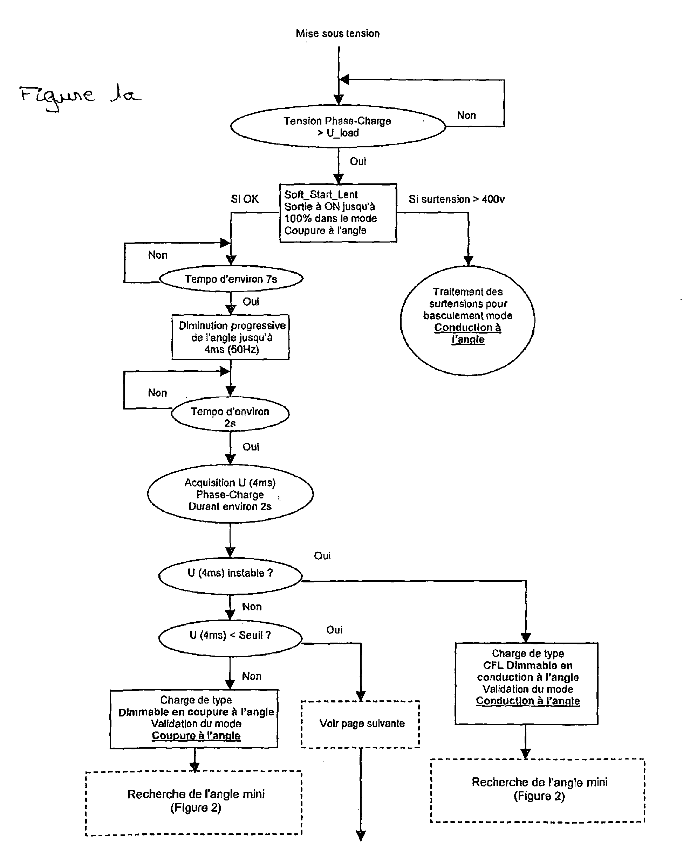

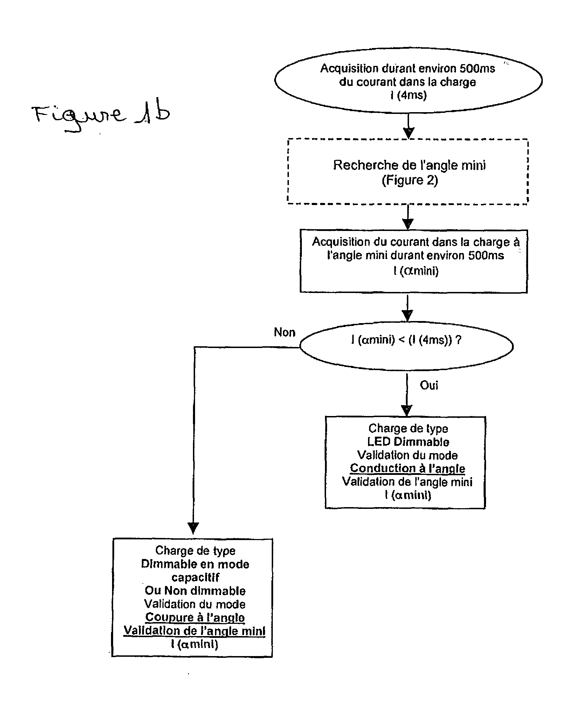

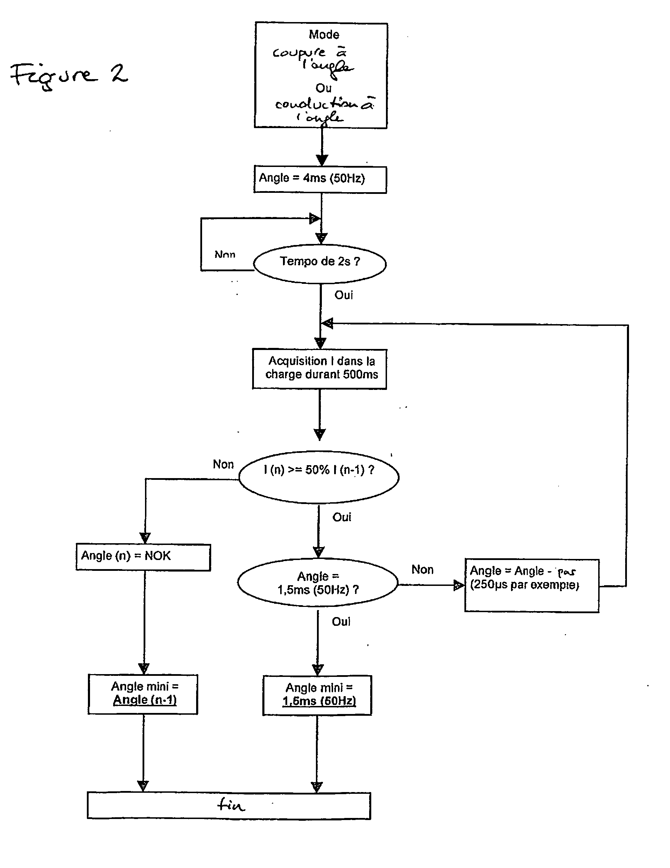

L'invention va à présent être décrite en référence aux figures 1a, 1b et 2, montrant des organigrammes représentant respectivement la phase de détection du mode de fonctionnement et la phase de détection de l'angle minimal permettant l'allumage correct de lampes de type fluo compact ou LED. Globalement, la mise en oeuvre successive de ces phases permet de faire fonctionner un variateur capable de gérer toute charge lumineuse, y compris des ampoules fluo compactes et des ampoules à LED.

L'organigramme faisant l'objet des figures 1a et 1b montre qu'il est tout d'abord nécessaire de détecter la présence d'une charge. La tension entre la phase et le point de connexion à la charge, dite tension Phase-Charge, est comparée par le microcontrôleur à une tension U_load prédéterminée. Si la tension Phase-Charge est supérieure à la tension U_load, la présence d'une charge aux bornes du variateur est avérée.

Dans ce cas, et selon les modalités classiques rappelées auparavant, la mise en place du démarrage en « soft-start » s'effectue toujours avec un mode de fonctionnement d'abord en coupure à l'angle.

En l'absence de surtension, qui indique que l'on a plutôt affaire à une charge capacitive ou résistive, surtension qui provoquerait le basculement dans le mode conduction à l'angle propre aux charges inductives, le soft-start se déroule jusqu'à la consigne maximale correspondant à l'angle de conduction maximal. Le variateur maintient cette consigne pendant une durée de l'ordre de 7 s pour laisser une charge de type lampe fluo compacte s'allumer correctement.

Puis, le variateur descend progressivement la consigne jusqu'à un angle correspondant à environ 40% de la consigne maximale : en l'espèce, puisque la consigne maximale correspond à 8,5 ms et qu'on descend à 4 ms, il s'agit d'un peu plus que 40%. Cette consigne spécifique est maintenue pendant 1 s à 2 s. Le variateur fait une acquisition de la forme et de la valeur de la tension, appelée Up, entre la phase et la sortie charge du variateur, sur chaque demi-période du secteur.

Si la tension est instable suivant un critère prédéfini, la lampe est considérée comme variable en mode conduction à l'angle et identifiée comme une charge de type fluo compact. Le variateur coupe la sortie, bascule en mode de conduction à l'angle et rallume la lampe à l'aide du soft-start classique jusqu'à une consigne d'angle d'environ 40% de la valeur de consigne maximale. Une séquence de détection de l'angle minimal de fonctionnement, dont la mise en oeuvre apparaît en figure 2, est ensuite initiée, à la suite de quoi, outre le mode de découpage en conduction à l'angle, l'angle minimal de fonctionnement α mini est validé pour une charge de type fluo compact variable.

Si la tension est stable ET supérieure à un seuil prédéfini, le mode de découpage en coupure à l'angle est validé et la charge identifiée comme variable en mode coupure à l'angle. La même séquence de détection de l'angle minimal de fonctionnement que ci-dessus, dont la mise en oeuvre apparaît en figure 2, est initiée. Outre le mode de fonctionnement en coupure à l'angle, la valeur de l'angle minimal de fonctionnement α mini est validée, pour une charge de type fluo compact variable.

Enfin, si la tension est stable ET inférieure à un seuil prédéfini, sa valeur appelée Up est mémorisée, et le variateur fait une acquisition, durant environ 500 ms, de la forme et de la valeur du courant dans la charge pour cet angle spécifique de 4ms (à 50Hz), et la mémorise sous le nom de Iₚ. Une séquence de détection de l'angle minimal de fonctionnement, dont la mise en oeuvre apparaît en figure 2, est ensuite à nouveau initiée.

A l'issue de cette détection, le courant à l'angle minimal de fonctionnement Iₘ est comparé à la valeur du courant Iₚ précédemment mémorisé.

Si le courant Iₘ est inférieur au courant Iₚ, le mode de découpage en conduction à l'angle et l'angle minimal de fonctionnement α mini sont validés, pour une charge identifiée comme étant de type LED variable.

Si le courant Iₘ n'est pas inférieur au courant Iₚ, le mode de découpage en coupure à l'angle et l'angle minimal de fonctionnement α mini sont validés pour une charge identifiée comme étant de type LED ou CFL non variable, dont l'alimentation en mode conduction à l'angle n'est pas dommageable à la lampe, mais permet tout de même à l'utilisateur d'allumer la lampe.

Que le variateur fonctionne en mode coupure à l'angle ou en mode conduction à l'angle, une détection de l'angle minimal de fonctionnement, dont la mise en oeuvre apparaît en figure 2, est réalisée à partir de la consigne de 4 ms.

Cette consigne est progressivement diminuée par pas prédéterminés, par exemple de 250 µs. Pendant une durée prédéfinie, se montant par exemple à 500ms, il est procédé à l'acquisition du courant sur chaque palier, une demi-période sur deux, sur quelques périodes en vue de pouvoir ensuite calculer des moyennes. La moyenne la plus haute et la plus basse sont mémorisées, la première servant lors de l'itération suivante, divisée par deux et comparée à la moyenne basse de la consigne courante.

Lorsque l'angle de consigne est tel que le courant est instable et que sa valeur est inférieure à 50% de la valeur du courant pour l'angle de consigne précédent, cet angle auquel on ajoute l'incrément (par exemple de 250µs) est mémorisé comme l'angle de consigne minimum, qui est donc l'angle de la boucle itérative précédente.

Dans l'hypothèse où le courant est stable et supérieur à 50% de la consigne précédente, la décrémentation est poursuivie jusqu'à arriver à un angle de consigne minimal d'une valeur fixée par défaut (à titre d'exemple 1,5 ms pour 50 Hz), qui sera alors mémorisée comme angle de consigne minimal.

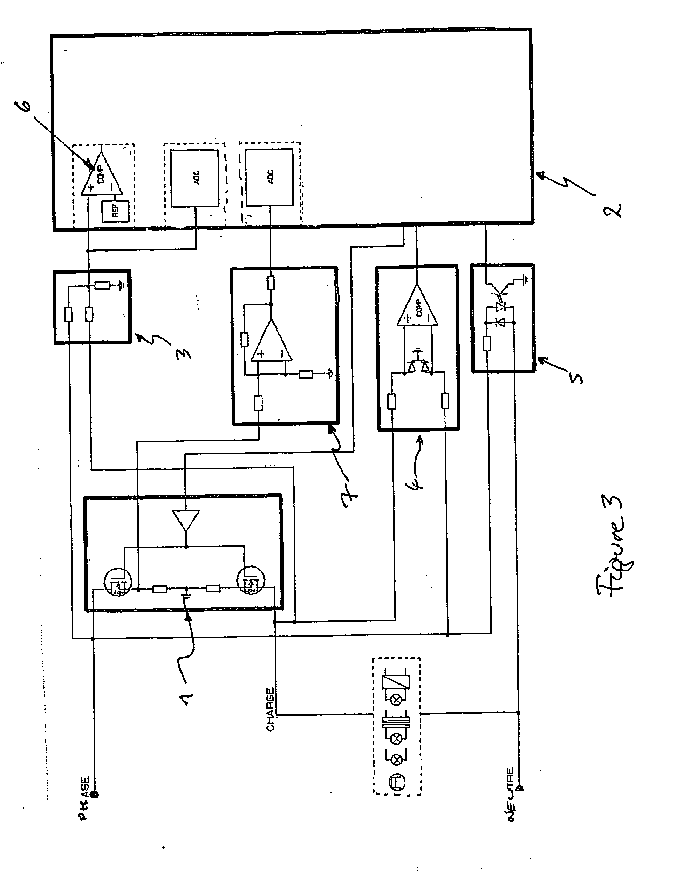

La figure 3 montre un variateur selon l'invention, mettant en oeuvre les procédés des figures 1a, 1b et 2, et comportant :
- Un étage de puissance (1) à base de semi-conducteurs adaptés à la puissance à commander.
- Une unité de contrôle (2) (typiquement un microcontrôleur) permettant de commander l'étage de puissance (1) pour bloquer ou laisser passer le courant pour alimenter la charge, et faire les différents traitements logiques nécessaires à la détection de la charge connectée.
- Une unité de détection (3,6) des surtensions et/ou de la tension de présence charge comportant un pont de résistance (3) et un étage comparateur (6).
- Une unité de détection du passage par zéro du courant (4) dans la charge.
- Une unité de détection du passage par zéro de la tension (5).
- Une unité permettant l'acquisition de la tension aux bornes du variateur (6).
- Une unité permettant l'acquisition du courant (7) qui traverse la charge.

Le fonctionnement est le suivant :
Une fraction de la tension entre PHASE et CHARGE est appliquée à l'entrée d'un convertisseur analogique numérique (ADC), interne ou externe au microcontrôleur (2) (représenté ici en interne) via un pont de résistance (3). Sur une demi-période du secteur, cette tension fait l'objet d'un traitement approprié, notamment d'une comparaison à un seuil prédéfini (REF) via l'étage comparateur (6), pendant la phase d'acquisition qui se déroule sur plusieurs périodes du secteur.

Pour ce qui concerne l'acquisition du courant qui traverse la charge, la tension aux bornes d'une résistance « shunt » qui est traversée par le courant de la charge, est amplifiée par un amplificateur (7). La tension de sortie de cet amplificateur est appliquée à l'entrée d'un convertisseur analogique numérique (ADC), également interne ou externe au microcontrôleur (2). Durant une demi-période sur deux du secteur, l'image de ce courant fait l'objet d'un traitement approprié, notamment d'une comparaison à un seuil prédéfini, pendant la phase d'acquisition qui se déroule sur plusieurs périodes du secteur.

Comme indiqué auparavant, le procédé et le dispositif de l'invention permettent l'utilisation du variateur avec des lampes de type fluo compactes et des lampes de type LED, grâce à la procédure de détection automatique. Ils assurent au surplus la détection des lampes fluo compactes non variables et des lampes LED, et permettent enfin à l'utilisateur de s'affranchir d'une manipulation de configuration du variateur suivant la lampe connectée.

## Revendications

1. Procédé de mise en fonctionnement d'un variateur de lumière sur une charge de type luminaire de nature quelconque placée en sortie d'un étage de puissance (2) du variateur géré par un microcontrôleur fournissant une alimentation variable par découpage de phase en mode soit de conduction à l'angle, soit de coupure à l'angle, à partir d'un état de non alimentation en sortie de l'étage de puissance (2) pris par le variateur en l'absence de charge, comportant les étapes suivantes :
a/ détection de la présence d'une charge en sortie de l'étage d'alimentation ;
b/ en cas de présence d'une charge, activation de l'alimentation de ladite charge en mode coupure à l'angle, et incrémentation régulière de l'angle de coupure selon un pas prédéterminé, en l'absence de surtension, jusqu'à l'obtention d'un angle maximal α_{M} de consigne de commande, ou basculement en mode conduction à l'angle en cas d'apparition de surtensions ;
c/ première temporisation à l'obtention de l'angle maximal α_{M} de consigne ;
d/ établissement de l'angle de coupure à une valeur prédéterminée αₚ comprise entre 40 et 50% de l'angle maximal α_{M} de consigne de commande ;
e/ seconde temporisation ;
f/ acquisition, mémorisation et traitement de la tension Up aux bornes du variateur ;
g/ comparaison de la tension Up après traitement à une valeur de tension seuil Uₛ prédéterminée ;
h/ activation du variateur en mode conduction à l'angle si ladite tension Uₚ après traitement est instable suivant un critère d'instabilité prédéterminé, puis détection de l'angle minimal αₘ de fonctionnement avant extinction de la lampe ;
i/ dans le cas contraire, et si la tension est supérieure à la tension seuil Uₛ prédéterminée, activation du variateur en mode coupure à l'angle, puis détection de l'angle minimal αₘ de fonctionnement avant extinction de la lampe ;
j/ si ladite tension Uₚ après traitement est stable suivant un critère d'instabilité prédéterminé, et si la tension est inférieure à la tension seuil Uₛ prédéterminée : acquisition, mémorisation et traitement du courant Iₚ durant une durée d' dans la charge, puis détection de l'angle minimal αₘ de fonctionnement avant extinction de la lampe ;
k/ après validation de l'angle minimal αₘ, acquisition, mémorisation et traitement du courant Iₘ dans la charge durant une durée d' ;
l/ si Iₘ < Iₚ, activation du variateur en mode conduction à l'angle ;
m/ si Iₘ > Iₚ, activation du variateur en mode coupure à l'angle.

2. Procédé de mise en fonctionnement d'un variateur de lumière selon la revendication précédente, **caractérisé en ce que** l'acquisition de tension Uₚ s'effectue n fois pour chaque demi-période du secteur, après la coupure du signal, pendant une durée d.

3. Procédé de mise en fonctionnement d'un variateur de lumière selon la revendication précédente, **caractérisé en ce que** n est compris entre 5 et 15 et la durée d est comprise entre 1 s et 3 s.

4. Procédé de mise en fonctionnement d'un variateur de lumière selon l'une des revendications précédentes, **caractérisé en ce que** le traitement de la tension Uₚ consiste à faire la moyenne des tensions acquises pour chaque demi-période du secteur pendant la durée d, et à ne mémoriser que les moyennes supérieure et inférieure.

5. Procédé de mise en fonctionnement d'un variateur de lumière selon la revendication précédente, **caractérisé en ce que** la valeur de la tension Uₚ après traitement est la moyenne supérieure.

6. Procédé de mise en fonctionnement d'un variateur de lumière selon l'une des revendications 4 et 5, **caractérisé en ce que** le critère d'instabilité prédéterminé est validé lorsque la valeur de la moyenne supérieure divisée par deux est supérieure à la moyenne inférieure.

7. Procédé de mise en fonctionnement d'un variateur de lumière selon l'une des revendications précédentes, **caractérisé en ce que** la durée de la première temporisation est comprise entre 1s et 10s.

8. Procédé de mise en fonctionnement d'un variateur de lumière selon l'une des revendications précédentes, **caractérisé en ce que** la durée de la seconde temporisation est comprise entre 1 s et 5s.

9. Procédé de mise en fonctionnement d'un variateur de lumière selon l'une des revendications précédentes, **caractérisé en ce que** l'angle maximal α_{M} de consigne de commande correspond à une durée de 8,5 ms en 50 Hz, et la valeur prédéterminée αₚ de l'angle de coupure correspond à 4 ms.

10. Procédé de mise en fonctionnement d'un variateur de lumière selon l'une des revendications précédentes, **caractérisé en ce que** la durée d' est comprise entre 400 et 600 ms.

11. Procédé de mise en fonctionnement d'un variateur de lumière selon l'une des revendications précédentes, **caractérisé par** les étapes ultérieures suivantes en boucle itérative pour la recherche de la consigne d'angle minimal αₘ lorsque le mode de coupure à l'angle ou de conduction à l'angle est activé avec la consigne initiale αₚ:
n/ temporisation d'une durée t ;
o/ acquisition, mémorisation et traitement du courant dans la charge pendant une période prédéterminée p ;
p/ si la consigne d'angle n'est pas la consigne initiale αₚ, comparaison d'une valeur de courant Iₙ de la consigne courante après traitement à une valeur calculée égale à un pourcentage x de la valeur Iₙ₋₁ issue du traitement de courant de la consigne précédente ;
q/ si la consigne d'angle est la consigne initiale αₚ, décrémentation de la consigne d'un pas p prédéterminé et retour à o/ ;
r/ selon le résultat de la comparaison, établissement de la consigne d'angle minimal αₘ à la consigne précédente lorsque Iₙ ≥ xIₙ₋₁ ou établissement d'une nouvelle consigne courante par décrémentation de la consigne d'un pas p prédéterminé et retour à o/, sauf à passer sous un seuil de consigne minimale prédéterminée, laquelle devient la consigne minimale αₘ.

12. Procédé de mise en fonctionnement d'un variateur de lumière selon la revendication précédente, **caractérisé en ce que** l'acquisition de courant s'effectue n' fois pour une demi-période du secteur sur deux, pendant la période prédéterminée p pour chaque boucle itérative.

13. Procédé de mise en fonctionnement d'un variateur de lumière selon la revendication précédente, **caractérisé en ce que** la moyenne la plus haute et la moyenne la plus basse des demi-périodes sont mémorisées pour chaque boucle itérative.

14. Procédé de mise en fonctionnement d'un variateur de lumière selon la revendication précédente, **caractérisé en ce que** la valeur calculée de la consigne précédente étant la moyenne haute divisée par deux, et la valeur de courant après traitement de la consigne courante étant la moyenne basse, la décrémentation itérative est poursuivie tant que la seconde est supérieure à x fois la première, et stoppée dans le cas contraire.

15. Procédé de mise en fonctionnement d'un variateur de lumière selon la revendication précédente, **caractérisé en ce que** x est égal à 0,5.

16. Procédé de mise en fonctionnement d'un variateur de lumière selon l'une des revendications 11 à 15, **caractérisé en ce que** la période prédéterminée p est comprise entre 400 ms et 600 ms.

17. Procédé de mise en fonctionnement d'un variateur de lumière selon l'une des revendications 11 à 16, **caractérisé en ce que** la décrémentation de la consigne courante s'effectue suivant des pas de l'ordre de 250 µs.

18. Procédé de mise en fonctionnement d'un variateur de lumière selon l'une quelconque des revendications 11 à 17, **caractérisé en ce que** la consigne d'angle minimale αₘ est établie pour une valeur de 1,5 ms.

## Patentansprüche

1. Verfahren zur Inbetriebnahme einer Lichtverstärkerröhre über eine Last vom Leuchtentyp beliebiger Art, die am Ausgang einer Leistungsstufe (2) der Verstärkerröhre platziert ist, die von einem Mikrocontroller verwaltet wird, der eine variable Versorgung durch Phasenschnitt entweder im Modus Phasenanschnitt oder Phasenabschnitt bereitstellt, ausgehend von einem Zustand der Nichtversorgung am Ausgang der Leistungsstufe (2), die von der Verstärkerröhre bei Abwesenheit einer Last eingenommen wird, das die folgenden Schritte umfasst:
a/ Detektion der Anwesenheit einer Last am Ausgang der Leistungsstufe,
b/ bei Anwesenheit einer Last, Aktivierung der Versorgung der Last im Modus Phasenabschnitt, und gleichmäßige Inkrementierung des Anschnittwinkels gemäß einem vorbestimmten Schritt, bei Abwesenheit von Überspannung, bis zum Erhalt eines maximalen Steuersollwinkels α_{M}, oder Übergang in den Modus Phasenanschnitt beim Auftreten von Überspannungen,
c/ erste Verweilzeit bei Erhalt des maximalen Sollwinkels α_{M},
d/ Festsetzung des Anschnittwinkels auf einen vorbestimmten Wert αₚ zwischen 40 und 50 % inklusive des maximalen Steuersollwinkels α_{M},
e/ zweite Verweilzeit,
f/ Erfassung, Speicherung und Verarbeitung der Spannung Up an den Klemmen der Verstärkerröhre,
g/ Vergleichen der Spannung Up nach Verarbeitung mit einem vorbestimmten Grenzspannungswert Uₛ,
h/ Aktivierung der Verstärkerröhre im Modus Phasenanschnitt, wenn die Spannung Up nach Verarbeitung gemäß einem vorbestimmten Instabilitätskriterium instabil ist, danach Detektion des Minimal-Funktionswinkels αₘ vor Erlöschen der Lampe,
i/ im gegenteiligen Fall und wenn die Spannung höher ist als die vorbestimmte Grenzspannung Uₛ, Aktivierung der Verstärkerröhre im Modus Phasenabschnitt, danach Detektion des Minimal-Funktionswinkels αₘ vor Erlöschen der Lampe,
j/ wenn die Spannung Up nach Verarbeitung gemäß einem vorbestimmten Instabilitätskriterium stabil ist und wenn die Spannung niedriger ist als die vorbestimmte Grenzspannung Uₛ: Erfassung, Speicherung und Verarbeitung des Stroms Iₚ während einer Dauer d' in der Last, danach Detektion des Minimal-Funktionswinkels αₘ vor Erlöschen der Lampe,
k/ nach Validierung des Minimalwinkels αₘ, Erfassung, Speicherung und Verarbeitung des Stroms Iₘ in der Last während einer Dauer d',
l/ wenn Iₘ < Iₚ, Aktivierung der Verstärkerröhre im Modus Phasenanschnitt,
m/ wenn Iₘ > Iₚ, Aktivierung der Verstärkerröhre im Modus Phasenabschnitt.

2. Verfahren zur Inbetriebnahme einer Lichtverstärkerröhre nach vorangehendem Anspruch, **dadurch gekennzeichnet, dass** die Erfassung der Spannung Up für jede Halbperiode des Netzes nach Unterbrechung des Signals während einer Dauer d n Mal erfolgt.

3. Verfahren zur Inbetriebnahme einer Lichtverstärkerröhre nach vorangehendem Anspruch, **dadurch gekennzeichnet, dass** n zwischen 5 und 15 inklusive ist und die Dauer d zwischen 1 s und 3 s inklusive ist.

4. Verfahren zur Inbetriebnahme einer Lichtverstärkerröhre nach einem der vorangehenden Ansprüche, **dadurch gekennzeichnet, dass** die Verarbeitung der Spannung Up darin besteht, aus den für jede Halbperiode des Netzes während der Dauer d erfassten Spannungen das Mittel zu bilden und nur das obere und untere Mittel zu speichern.

5. Verfahren zur Inbetriebnahme einer Lichtverstärkerröhre nach vorangehendem Anspruch, **dadurch gekennzeichnet, dass** der Wert der Spannung Up nach Verarbeitung das obere Mittel ist.

6. Verfahren zur Inbetriebnahme einer Lichtverstärkerröhre nach einem der Ansprüche 4 und 5, **dadurch gekennzeichnet, dass** das vorbestimmte Instabilitätskriterium validiert wird, wenn der Wert des oberen Mittels dividiert durch zwei größer als das untere Mittel ist.

7. Verfahren zur Inbetriebnahme einer Lichtverstärkerröhre nach einem der vorangehenden Ansprüche, **dadurch gekennzeichnet, dass** die Dauer der ersten Verweilzeit zwischen 1 s und 10 s inklusive ist.

8. Verfahren zur Inbetriebnahme einer Lichtverstärkerröhre nach einem der vorangehenden Ansprüche, **dadurch gekennzeichnet, dass** die Dauer der zweiten Verweilzeit zwischen 1 s und 5 s ist.

9. Verfahren zur Inbetriebnahme einer Lichtverstärkerröhre nach einem der vorangehenden Ansprüche, **dadurch gekennzeichnet, dass** der maximale Steuersollwinkel α_{M} einer Dauer von 8,5 ms bei 50 Hz entspricht und der vorbestimmte Wert αₚ des Anschnittwinkels 4 ms entspricht.

10. Verfahren zur Inbetriebnahme einer Lichtverstärkerröhre nach einem der vorangehenden Ansprüche, **dadurch gekennzeichnet, dass** die Dauer d' zwischen 400 und 600 ms inklusive ist.

11. Verfahren zur Inbetriebnahme einer Lichtverstärkerröhre nach einem der vorangehenden Ansprüche, dass durch die folgenden weiteren Schritte in iterativer Schleife für die Suche des minimalen Sollwinkels αₘ gekennzeichnet ist, wenn der Modus Phasenabschnitt oder Phasenanschnitt mit dem Ausgangssollwert αₚ aktiviert ist:
n/ Verweilzeit einer Dauer t,
o/ Erfassung, Speicherung und Verarbeitung des Stroms in der Last während einer vorbestimmten Dauer p,
p/ wenn der Winkelsollwert nicht der Ausgangssollwert αₚ ist, Vergleich eines Stromwerts Iₙ des laufenden Sollwerts nach Verarbeitung mit einem berechneten Wert, der gleich einem Prozentsatz x des Werts Iₙ₋₁ aus der Verarbeitung des Stroms des vorangehenden Sollwerts ist,
q/ wenn der Winkelsollwert der Ausgangssollwert αₚ ist, Dekrementierung des Sollwerts um einen vorbestimmten Schritt p und zurück zu o/,
r/ je nach Ergebnis des Vergleichs, Festsetzung des minimalen Winkelsollwerts αₘ auf den vorangehenden Sollwert, wenn Iₙ ≥ xIₙ₋₁ oder Festsetzung eines neues laufenden Sollwerts durch Dekrementierung des Sollwerts um einen vorbestimmten Schritt p und zurück zu o/, außer man gelangt unter einen vorbestimmten minimalen Sollgrenzwert, der der minimale Sollwert αₘ wird.

12. Verfahren zur Inbetriebnahme einer Lichtverstärkerröhre nach vorangehendem Anspruch, **dadurch gekennzeichnet, dass** die Stromerfassung für eine Halbperiode des Netzes von zwei während der für jede iterative Schleife vorbestimmten Periode p n' Mal erfolgt.

13. Verfahren zur Inbetriebnahme einer Lichtverstärkerröhre nach vorangehendem Anspruch, **dadurch gekennzeichnet, dass** das höchste Mittel und das niedrigste Mittel der Halbperioden für jede iterative Schleife gespeichert werden.

14. Verfahren zur Inbetriebnahme einer Lichtverstärkerröhre nach vorangehendem Anspruch, **dadurch gekennzeichnet, dass** berechnete Wert des vorangehenden Sollwerts das hohe Mittel dividiert durch zwei ist und der Stromwert nach Verarbeitung des laufenden Sollwerts das niedrige Mittel ist, wobei die iterative Dekrementierung fortgesetzt wird, solange der zweite x Mal höher ist als der erste, und im gegenteiligen Fall gestoppt wird.

15. Verfahren zur Inbetriebnahme einer Lichtverstärkerröhre nach vorangehendem Anspruch, **dadurch gekennzeichnet, dass** x gleich 0,5 ist.

16. Verfahren zur Inbetriebnahme einer Lichtverstärkerröhre nach einem der Ansprüche 11 bis 15, **dadurch gekennzeichnet, dass** die vorbestimmte Periode p zwischen 400 ms und 600 ms inklusive ist.

17. Verfahren zur Inbetriebnahme einer Lichtverstärkerröhre nach einem der Ansprüche 11 bis 16, **dadurch gekennzeichnet, dass** die Dekrementierung des laufenden Sollwerts in Schritten der Größenordnung von 250 µs erfolgt.

18. Verfahren zur Inbetriebnahme einer Lichtverstärkerröhre nach einem der Ansprüche 11 bis 17, **dadurch gekennzeichnet, dass** der minimale Winkelsollwert αₘ für einen Wert von 1,5 ms festgesetzt wird.

## Claims

1. A method for operating a light dimmer on a luminaire-type load of any nature placed at the output of a power stage (2) of the dimmer managed by a microcontroller providing a variable power supply by phase section either in angle conduction mode, or angle cut mode, from a non-powered state at the output of the power stage (2) assumed by the dimmer when there is no load, including the following steps:
a/ detecting the presence of a load at the output of the power stage;
b/ if a load is present, activating the power supply of said load in angle cut mode, and regularly incrementing the cut angle by a predetermined pitch, when there is no overvoltage, until obtaining a maximum command setpoint angle α_{M}, or switching into angle conduction mode if overvoltages appear;
c/ first time delay upon obtaining the maximum setpoint angle a_{M};
d/ establishing the cut angle at a predetermined value αₚ comprised between 40 and 50° of the maximum control setpoint angle α_{M};
e/ second time delay;
f/ acquiring, storing and processing the voltage Up across the terminals of the dimmer;
g/ comparing the voltage Up after processing to a predetermined threshold voltage value Uₛ;
h/ activating the dimmer in angle conduction mode if said voltage Up after processing is unstable according to a predetermined instability criterion, then detecting the minimum operating angle αₘ before extinguishing the bulb;
i/ otherwise, and if the voltage is above the predetermined threshold voltage Uₛ, activating the dimmer in angle cut mode, then detecting the minimum operating angle αₘ before extinguishing the bulb;
j/ if said voltage Up after processing is stable according to a predetermined instability criterion, and if the voltage is below the predetermined threshold voltage Uₛ: acquiring, storing and processing the current Iₚ during a duration d' in the load, then detecting the minimum operating angle αₘ before extinguishing the bulb;
k/ after validating the minimum angle αₘ, acquiring, storing and processing the current Iₘ in the load during a duration d';
l/ if Iₘ < Iₚ, activating the dimmer in angle conduction mode;
m/ if Iₘ > Iₚ, activating the dimmer in angle cut mode.

2. The method for operating a light dimmer according to the preceding claim, **characterized in that** the voltage acquisition Up is done n times for each half-period of the sector, after cut off of the signal, during a duration d.

3. The method for operating a light dimmer according to the preceding claim, **characterized in that** n is comprised between 5 and 15 and the duration d is comprised between 1 s and 3 s.

4. The method for operating a light dimmer according to one of the preceding claims, **characterized in that** the processing of the voltage Up consists of taking the average of the voltages required for each half-period of the sector during the duration d, and only storing the highest and lowest averages.

5. The method for operating a light dimmer according to the preceding claim, **characterized in that** the value of the voltage Up after processing is the highest average.

6. The method for operating a light dimmer according to one of claims 4 and 5, **characterized in that** the predetermined instability criterion is validated when the highest average value divided by two is greater than the lowest average.

7. The method for operating a light dimmer according to one of the preceding claims, **characterized in that** the duration of the first time delay is comprised between 1 s and 10 s.

8. The method for operating a light dimmer according to one of the preceding claims, **characterized in that** the duration of the second time delay is comprised between 1 s and 5 s.

9. The method for operating a light dimmer according to one of the preceding claims, **characterized in that** the maximum control setpoint angle α_{M} corresponds to a duration of 8.5 ms at 50 Hz, and the predetermined value αₚ of the cut angle corresponds to 4 ms.

10. The method for operating a light dimmer according to one of the preceding claims, **characterized in that** the duration d' is comprised between 400 and 600 ms.

11. The method for operating a light dimmer according to one of the preceding claims, **characterized by** the following subsequent steps in an iterative loop to look for the minimum angle setpoint αₘ when the angle cut or angle conduction mode is activated with the initial setpoint αₚ:
n/ time delay with a duration t;
o/ acquisition, storage and processing of the current in the load during a predetermined period p;
p/ if the angle setpoint is not the initial setpoint αₚ, comparison of a current value Iₙ of the current setpoint after processing to a calculated value equal to a percentage x of the value Iₙ₋₁ resulting from the current processing of the preceding setpoint;
q/ if the angle setpoint is the initial setpoint αₚ, decrementing the setpoint by a predetermined pitch p and returning to o/;
r/ based on the outcome of the comparison, establishing the minimum angle setpoint αₘ at the preceding setpoint when Iₙ ≥ xIₙ₋₁ or establishing a new current setpoint by decrementing the setpoint by a predetermined pitch p and returning to o/, unless dropping below a predetermined minimum setpoint threshold, which becomes the minimum setpoint αₘ.

12. The method for operating a light dimmer according to the preceding claim, **characterized in that** the current acquisition is done n' times for every other half-period of the sector, during the predetermined period p for each iterative loop.

13. The method for operating a light dimmer according to the preceding claim, **characterized in that** the highest average and the lowest average of the half-periods are stored for each iterative loop.

14. The method for operating a light dimmer according to the preceding claim, **characterized in that** the calculated value of the preceding setpoint being the upper average divided by two, and the current value after processing of the current setpoint being the lower average, the iterative decrementing is continued as long as the second is x times higher than the first, and stopped otherwise.

15. The method for operating a light dimmer according to the preceding claim, **characterized in that** x is equal to 0.5.

16. The method for operating a light dimmer according to one of claims 11 to 15, **characterized in that** the predetermined period p is comprised between 400 ms and 600 ms.

17. The method for operating a light dimmer according to one of claims 11 to 16, **characterized in that** the decrementing of the current setpoint is done by pitches of approximately 250 µs.

18. The method for operating a light dimmer according to any one of claims 11 to 17, **characterized in that** the minimum setpoint angle αₘ is established for a value of 1.5 ms.
